Europäisches Patentamt

European Patent Office

Office européen des brevets

(11) Publication number: 0 363 908 A2

# EUROPEAN PATENT APPLICATION

(21) Application number: 89118817.9

(51) Int. Cl.⁵: G02F 1/133

(22) Date of filing: 10.10.89

(30) Priority: 11.10.88 US 255291

(43) Date of publication of application:
18.04.90 Bulletin 90/16

(84) Designated Contracting States:
DE FR GB IT

(71) Applicant: GENERAL ELECTRIC COMPANY
1 River Road
Schenectady New York 12305(US)

(72) Inventor: Christiano, Victor
6, Robert Frost Drive
Hamilton Square - New Jersey(US)
Inventor: Vieland, Leon, Joseph
62, Snowden Lane
Princeton - New Jersey(US)

(74) Representative: von Bezold, Dieter, Dr. et al
Dr. Dieter von Bezold Dipl.-Ing. Peter Schütz
Dipl.-Ing. Wolfgang Heusler Brienner Strasse
52
D-8000 München 2(DE)

(54) Liquid crystal device having improved alignment structure.

(57) The alignment structure of a liquid crystal device (10) comprises a layer (16,17) of a first material having good molecular alignment and tilt angle characteristics arranged on the control electrode (14,15) of at least one of the substrates (13,12). A layer (18,19) of a second material, which is electrically compatible with the liquid crystal material (11), is arranged on the layer of the first material.

FIG. 1

EP 0 363 908 A2

# LIQUID CRYSTAL DEVICE HAVING IMPROVED ALIGNMENT STRUCTURE

This invention relates generally to liquid crystal devices and particularly to a double layer alignment structure for such devices.

Display devices which utilize twisted nematic liquid crystals include a liquid crystal material disposed between two insulative substrates, at least one of which is transparent. Electrical control electrodes are disposed on the surfaces of the substrates which face the liquid crystal material. In one type of liquid crystal device, both substrates and their associated electrodes are transparent, to permit light to pass through the entire structure when the elongated molecules of the liquid crystal material are in one orientation, and to be opaque to light for another orientation of the liquid crystal molecules. In another type of liquid crystal device, only one substrate and its associated electrode are transparent. In this latter type of device, light passes through the one substrate and is reflected off the liquid crystal material, for one state of the liquid crystal material. For another state of the liquid crystal material, light passes through the liquid crystal material and is reflected from the other substrate. For both types of devices, images are formed by voltage biasing the control electrodes of selected cells to change the light transmission capabilities of the energized cells.

In both types of liquid crystal devices, the molecules of the liquid crystal material are elongated and must be properly aligned with the surfaces of the substrates to assure uniformity of operation and high contrast of the displayed information. The required alignment of the liquid crystal molecules is achieved by coating the surfaces of the electrodes with an alignment material and rubbing the alignment material in the direction desired for the alignment of the molecules.

In active matrix liquid crystal display devices, a switching device, such as a thin film transistor (TFT) or a solid state diode, is associated with each of the liquid crystal elements within the display. The alignment layer for active matrix liquid crystal devices must control three properties or characteristics to provide optimum operation and contrast: tilt angle, between the principal axis of the molecules and the substrate; alignment, i.e., parallel orientation, of the liquid crystal molecules; and a high RC time constant. The tilt angle should be between $1°$ and $5°$ to provide a suitable response time and to optimize the viewability of the device. Good molecular alignment of the liquid crystal molecules is necessary to provide uniformity of operation and high contrast between the energized and deenergized states. The high RC time constant is needed because the resistivity of the liquid crystal material must be sufficiently high to assure that the liquid crystal cells are capable of storing a charge for a time period of sufficient duration to display the desired image.

In directly driven liquid crystal devices, i.e., those which do not employ solid state switching devices, the alignment layer must control only the tilt angle and the alignment of the liquid crystal molecules. The time constant, or resistivity, of the liquid crystal material is of no concern, because the crystal cells are not called upon to store a charge during the display of information. Accordingly, the alignment layer for directly driven display devices frequently is a polyimide. The polyimide provides excellent molecular alignment and a desirable tilt angle within the range of $1.5°$ to $3°$. However, this alignment material frequently degrades the resistivity of commonly used liquid crystal materials and, therefore, is unsuitable as an alignment layer in active matrix liquid crystal devices. Other materials, which do not adversely effect the resistivity of the liquid crystal material, typically demonstrate either poor molecular alignment or inadequate tilt angle and, therefore, also are not useful as alignment materials for active matrix liquid crystal devices.

For these reasons, there is a need for an alignment structure for liquid crystal devices which provides acceptable tilt angle, good alignment of the liquid crystal molecules, and an RC time constant suitable for use with active matrix liquid crystal devices. The present invention fulfills these needs.

In accordance with the present invention, a liquid crystal device, having a liquid crystal material disposed between first and second substrates and electrical electrodes arranged on the surfaces of the substrates adjacent to the liquid crystal material, includes an improved alignment structure wherein a layer of a first material having good molecular alignment characteristics is arranged on at least one of the electrodes, and a layer of a second material, which is electrically compatible with the liquid crystal material, is arranged on the layer of the first material.

In the drawings:

FIGURE 1 is a simplified cross section of a first preferred embodiment.

FIGURE 2 is a simplified cross section of another preferred embodiment.

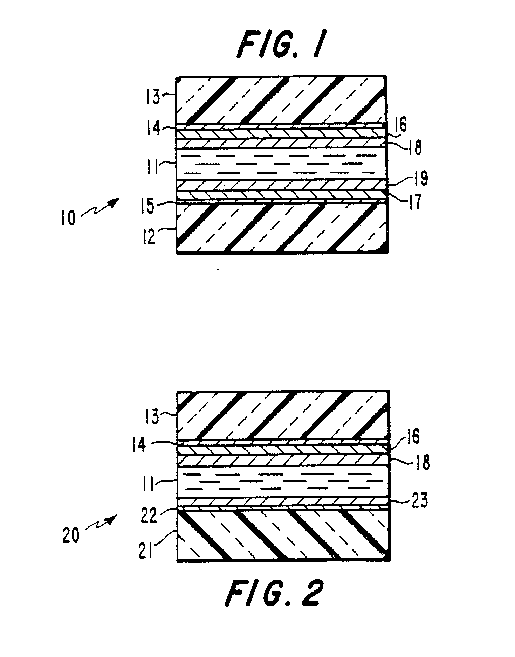

In FIGURE 1, a liquid crystal device 10 includes a liquid crystal material 11 disposed between two transparent insulative substrates 12 and 13. A transparent electrode 14 is disposed on the surface of the substrate 13 which faces the liquid crystal material 11. Any solid state switching devices, such as TFT's or MIM's, which are required for an active matrix display device are not shown. However, the space needed for the solid state switching devices typically is provided by omitting a small corner of the electrode 14 and fabricating the solid state switching devices in the space thus provided, using solid state manufacturing techniques which are known to those skilled in the art. A transparent electrode 15 is provided on the surface of the substrate 12 which faces the liquid crystal material 11. An alignment layer 16, which provides good molecular alignment and tilt angle, is disposed over the transparent electrode 14. Similarly, an alignment layer 17, which also provides good molecular alignment and tilt angle, is disposed over the electrode 15 of the substrate 12. The alignment layers 16 and 17 are each composed of a polymeric material which provides good molecular alignment and tilt angle, and preferably is a polyimide. A second layer 18, which is electrically compatible with the liquid crystal material 11 and thus does not adversely affect the resistivity of the material, is disposed over the alignment layer 16. Similarly, a second layer 19, which is also electrically compatible with the liquid crystal material 11, is disposed over the alignment layer 17 of the substrate 12. The electrically compatible layers 18 and 19 are preferably composed of short chain organo-silanes and preferably are each a methylamino-propyltrimethoxysilane (commonly called organo-silane or MAPS). The layers 18 and 19 are kept thin to avoid any adverse affect on the alignment capabilities of the alignment layers 16 and 17.

The structure shown in FIGURE 1 is advantageous because optimum tilt angle, molecular alignment and electrical compatibility are achieved. The polymeric alignment layer alone ordinarily would provide the necessary molecular alignment and tilt angle, but would undesirably react with the liquid crystal material 11 to decrease the resistivity of the liquid crystal material and cause degradation of the performance of the device. The organo-silane material, from which the layers 18 and 19 are formed, has only fair alignment properties and a very shallow tilt angle, e.g., less than 0.5°, and thus cannot be used alone because the low tilt angle causes ambiguous operation. However, by using the two-layer structure as described with respect to FIGURE 1, fully acceptable tilt angle, molecular alignment and retention of liquid crystal material resistivity are achieved.

FIGURE 2 shows a liquid crystal device 20 in which substrates 13 and 21 have different alignment layers. The substrate 13 is provided with the same electrode 14 and alignment layers 16 and 18 as the FIGURE 1 embodiment. However, the substrate 21 includes a transparent electrode 22 and a single alignment layer 23, which provides fair alignment properties and good electrical compatibility with the liquid crystal material 11, but has a shallow tilt angle. Alignment layer 23, therefore, preferably is the organo-silane material. The tilt angle of the liquid crystal device 20 is the average of the tilt angles of the alignment layers 16 and 23. The advantage of the utilization of a single alignment layer on the substrate 21 is that, when a color filter is associated with the substrate 21, the substrate cannot be heated above 150°C; and the organo-silane requires only 150°C to polymerize, whereas the polyimides of which the layers 18 and 19 are composed require 300-350°C to polymerize.

The procedure used to apply the double alignment layer is:

1. Clean the substrate plate with acetone, alcohol and a mild detergent. Rinse the substrate with running deionized water for approximately one hour. Rinse and dry.

2. Apply the polyimide layer by spinning at approximately 4,000 RPM. Dry at 60°C, and bake out at 350°C for about one-half hour.

3. Rub the surface with Aetna WC-4 synthetic cloth.

4. Dip into isopropyl alcohol bath and allow to dry.

5. Apply a 0.1% solution of MAPS, by dip coating.

6. Rinse in running deionized water for approximately three minutes.

7. Blow dry with dry nitrogen.

The substrates thus prepared can then be incorporated into liquid crystal devices using known techniques.

## Claims

1. A liquid crystal device having a liquid crystal material disposed between first and second substrates and electrical electrodes arranged on the surfaces of said substrates adjacent to said liquid crystal material, characterized by an alignment structure comprising:
a layer (16,17) of a first material having good molecular alignment characteristics and an acceptable tilt angle arranged on at least one (14,15) of said electrodes (14,15,22); and
a layer (18,19) of a second material having electrical compatibility with said liquid crystal material (11) arranged on said layer of said first material.

2. The device of claim 1, characterized in that said layer (16,17) of said first material is arranged on each of said electrodes (14,15).

3. The device of claim 1, characterized in that said layer (16) of said first material is arranged on the electrode (14) only of said first substrate (13);

and said layer (18,23) of said second material is arranged on said first material and on the electrode (22) of said second substrate (21).

4. The device of claim 1,2 or 3, characterized in that said first material is a polymeric material, and said second material is a short chain orango-silane.

5. The device of claim 4, characterized in that said second material maintains the resistivity of said liquid crystal material (11).

6. The device of claim 5, characterized in that said first material is polyimide, and said second material is methylamino propyltrimethoxysilane.

# FIG. 1

# FIG. 2